# EUROPÄISCHE PATENTSCHRIFT

(11) **EP 0 994 549 B1**
(45) Veröffentlichungstag und Bekanntmachung des Hinweises auf die Patenterteilung: **03.11.2004**
(21) Anmeldenummer: 99119603.1
(22) Anmeldetag: 02.10.1999
(51) Int. Cl.: H02J 7/10, H02J 7/00

(54) **Verfahren zum Laden von Akkumulatoren**
Method for charging batteries
Procédé pour charger des batteries

(30) Priorität: 17.10.1998 DE 19847988
(43) Veröffentlichungstag der Anmeldung: 19.04.2000
(73) Patentinhaber: Fiedler, Norbert, 59929 Brilon (DE)
(72) Erfinder: Fiedler, Norbert, 59929 Brilon (DE)
(74) Vertreter: Stenger, Watzke & Ring Patentanwälte

(56) Entgegenhaltungen:
- EP-A- 0 629 032
- US-A- 4 564 798
- US-A- 5 633 576
- US-A- 5 710 506

## Beschreibung

Die vorliegende Erfindung betrifft ein Verfahren zum Laden von Akkumulatoren, insbesondere für Gel-, Vlies- und Naßakkumulatoren, unter Verwendung einer steuerbaren Strom- und Spannungsquelle und einer Steuereinrichtung, mit einer Haupt- und Nachladephase, wobei in der Hauptladephase der Ladestrom konstant gehalten wird bis die Ladespannung eine vorgebbare Spannungsgrenze erreicht.

Es sind verschiedene Ladeverfahren zum Laden von Akkumulatoren, insbesondere für Gel-, Vlies- und Naßakkumulatoren für Kleintraktion, Traktion und stationären Einsatz, beispielsweise für Krankenfahrstühle, Reinigungsmaschinen, Flurförderfahrzeuge, Elektroautos, Notstromanlagen und dergleichen, bekannt. Dabei werden geregelte und ungeregelte Verfahren eingesetzt, deren Umschalt- und/oder Einschaltparameter in den DIN-Normen DIN 41772 bis DIN 41774 festgelegt sind.

Aufgrund verschiedener Ausführungen von Akkumulatoren, insbesondere hinsichtlich deren Kapazität und Ausbildung des Elektrolyten hinsichtlich festgesetzten oder flüssigen Elektrolyten in Form von Gel-, Vlies- oder Naßakkumulatoren, sind beim Laden verschiedenen Charakteristika hinsichtlich der Umschalt- und/oder Einschaltparameter zu berücksichtigen. Dabei sind bei den verschiedenen Ladeverfahren zur Einleitung der Haupt- und Nachladephase verschiedene Ladecharakteristika der Akkumulatoren zu erkennen, insbesondere hinsichtlich der Akkumulatorenkapazität, der Umschalt- und/oder Einschaltparameter, sowie die entsprechenden erforderlichen Ladeströme einzustellen.

Es sind Ladeverfahren bekannt, bei denen ein Temperaturanstieg des Akkumulators zusammen mit einer Spannungs- oder Strommessung als Regelgröße benutzt wird. Darüber hinaus ist es bekannt, die zu messende Ladespannung oder den zu messenden Ladestrom mit Differenzwerten zu vergleichen und bei Erreichen vorgegebener Differenzen und bei Erreichen vorgegebener Differenzwerte diese zur Regelung zu benutzen. Ferner sind Ladeverfahren bekannt, bei denen die Ladung der Akkumulatoren durch zyklische Ein- und Ausschaltung nach vorgegebenen Werten erfolgt, wobei der Vorladezustand der Akkumulatoren anhand der sich verändernden Ladewerte erkannt wird. Ein solches Ladeverfahren ist beispielsweise aus der US 5,589,755 bekannt, wobei die Spannung nach Abschaltung des Ladestroms immer wieder mit einer vorgegebenen Ruhespannung verglichen wird.

Bei den bisher bekannten Ladeverfahren ist es erforderlich, diese den entsprechend zu ladenden Akkumulatoren und deren Kapazitäten anzupassen, insbesondere die Ladenennwerte und den Typ der Akkumulatoren bei festgesetzten oder flüssigen Elektrolyten wie sie in Gel-, Vlies- und Näßakkumutatoren verwendet werden. Da der Ladevorgang dabei von der Temperatur, dem Alterungsgrad und dergleichen der Akkumulatoren abhängig ist, ist die Anpassung des Ladeverfahrens bei den bisher bekannten Ladeverfahren überaus aufwendig und in der Regel unzureichend, mit der Folge, daß eine Volladung der Akkumulatoren nicht gewährleistet wird oder die Akkumulatoren durch Überladung beschädigt werden.

US-A-5,710,506 offenbart ein Ladeverfahren, wobei in einem "bulk charge" - Modus zunächst eine Ladung mit konstantem Strom Iₘₐₓ erfolgt, bis eine Spannung V_{BLK} erreicht ist. Anschließend wird auf Konstantspannungsladung bei V_{BLK} umgeschaltet, bis der Ladestrom auf 1/10, 1/20 oder 1/40 Iₘₐₓ abgesunken ist.

Der Erfindung liegt in Anbetracht dieses Standes der Technik die **Aufgabe** zugrunde, ein Ladeverfahren der eingangs genannten Art unter Meidung der beschriebenen Nachteile derart zu verbessern, daß ein weniger aufwendiges und zuverlässigeres Laden von Akkumulatoren unabhängig von den verschiedenen Akkumulatorenausführungen, deren jeweiliger Ladetemperatur, deren Alterungsgrad und dergleichen ermöglicht wird.

Zur technischen **Lösung** dieser Aufgabe wird das Verfahren der eingangs genannten Art dahingehend verbessert, daß sodann bei konstanter Ladespannung die Änderung des Ladestroms über der Zeit ermittelt und bei Erreichen eines vorgebbaren Änderungswertes des Ladestroms über der Zeit der zu diesem Zeitpunkt fließende Ladestrom konstant gehalten wird und in der Nachladephase bei diesem Ladestrom dann die Änderung der Ladespannung über der Zeit ermittelt und bei Erreichen eines vorgebbaren Änderungswertes der Ladespannung über der Zeit der Ladevorgang beendet wird.

Bei dem erfindungsgemäßen Ladeverfahren wird innerhalb der Hauptiadephase eine sichere Beendigung der Hauptladung durch Erreichen eines vorgebbaren Änderungswerts des Ladestroms über der Zeit festgestellt. Durch die Vorgabe dieses Zeitpunkts wird dann der Zeitpunkt für den Beginn der Nachladephase festgelegt, innerhalb welcher dann bei diesem konstanten Ladestrom die Änderung der Ladespannung über der Zeit sicher bestimmt und bei Erreichen eines vorgebbaren Änderungswertes der Ladespannung über der Zeit der Ladevorgang sicher beendet wird. Damit ist eine Volladung von Akkumulatoren ohne Beschädigung derselben durch Überladung und dergleichen, unabhängig von der Akkumulatorenkapazität, der Akkumulatorenausführung, insbesondere bezüglich des verwendeten Elektrolyten, sowie unabhängig von der Akkumulatorentemperatur während des Ladevorgangs und des Alterungsgrades des Akkumulators in zuverlässiger und weniger aufwendiger Art und Weise gegeben.

Gemäß einer weiteren vorteilhaften Ausgestaltung der Erfindung wird der für die Nachladephase erforderliche Nachladestrom in Abhängigkeit des Akkumulatorentyps bestimmt, wobei nach der Hauptladephase der Anstieg der Ladespannung über der Zeit ermittelt und anhand dieses Wertes der Ladestrom für die Nachladephase vorgegeben wird.

In einer weiteren vorteilhaften Ausgestaltung der Erfindung wird der für die Nachladephase erforderliche Strom in Abhängigkeit des Akkumulatorentyps bestimmt, wobei nach der Hauptladephase der Ladestrom l abgeschaltet, der Abfall der Ladespannung ermittelt und anhand dieses Wertes der Ladestrom für die Nachladephase vorgegeben und eingeschaltet wird.

Gemäß diesen erfindungsgemäßen Ausgestaltungen wird der für die Nachladephase erforderliche Ladestrom in Abhängigkeit des Akkumulatorentyps bestimmt und eingeschaltet, was insbesondere hinsichtlich des verwendeten Elektrolyten bei Gel-, Vlies- und Naßakkumulatoren von Bedeutung ist, da diese zur Gewährleistung einer Volladung unterschiedlich große Ladeströme benötigen. Gleiches gilt dabei für die vorgebbaren Änderungswerte der Ladespannung über der Zeit innerhalb der Nachladephase, die ein sicheres Beenden des Ladevorgangs gewährleisten. Auch sind in Abhängigkeit der Akkumulatorenausführungen, insbesondere hinsichtlich des verwendeten Elektrolyten bei Gel-, Vlies- oder Naßakkumulatoren unterschiedliche Änderungswerte der Ladespannung über der Zeit entscheidend. Diese Unterschiede ergeben sich bei Gel-, Vlies- und Naßakkumulatoren aufgrund der unterschiedlichen Säuremischung. Bei einem Naßakkumulator bei welchem eine Säuremischung erforderlich wird, folgt eine Änderung der Ladespannung über der Zeit sehr langsam. Bei einem Vliesakkumulator, wo der Elektrolyt im Vlies festgesetzt ist, ist die Änderung der Ladespannung über der Zeit in etwa doppelt so schnell, bei einem Gelakkumulator ist die Änderung der Ladespänhuhg über der Zeit nochmals doppelt so schnell. Durch das Ermitteln der Ladespannung über der Zeit, sei es in Form eines Anstiegs der Ladespannung über der Zeit oder in Form eins Abfalls der Ruhespannung über der Zeit, wird der jeweils entsprechende Ladestrom für den anhand dieser Änderungswerte erkannten Akkumulatorentyp eingestellt und für die Nachladephase verwendet.

Gemäß einer weiteren vorteilhaften Ausgestaltung der Erfindung wird der Ladevorgang während der Hauptladephase beendet, wenn eine vorgegebene maximale Hauptladezeit überschritten wird. In vorteilhafter Weise wird der Ladevorgang während der Hauptladephase auch beendet, wenn eine vorgegebene maximale Konstantstromphase des Ladestroms überschritten wird. Gemäß einer weiteren vorteilhaften Ausgestaltung des erfindungsgemäßen Verfahrens wird der Ladevorgang während der Nachladephase beendet, wenn eine vorgegebene Nachladezeit überschritten wird. Durch diese Maßnahmen ist eine Sicherheitsabschaltung des Ladevorgangs gegeben, die ein Überladen von nicht mehr vollständig aufladbaren Akkumulatoren verhindert und zum anderen diesen Umstand ermittelt. Dazu wird vorteilhafterweise der Umstand der verfahrensgemäßen Beendigung des Ladevorgangs angezeigt.

Weiter Einzelheiten, Merkmale und Vorteile der Erfindung werden im Folgenden anhand der in den Figuren gezeigten Ausführungsbeispiele näher erläutert. Dabei zeigen:
- Fign. 1 und 2: die Kennlinienabschnitte des Ladestroms und der Ladespannung über der Zeit während des Ladevorganges nach DIN 41773;
- Fig. 3: in einem Blockdiagramm den Ablauf des Ladeverfahrens während der Hauptladephase;
- Fig. 4: in einem Blockdiagramm den Ablauf des Ladeverfahrens in der Nachladephase;
- Fig. 5: in einem Blockdiagramm den Ablauf einer ersten Ausführungsform zur Ermittlung des für die Nachladephase erforderlichen Ladestroms und
- Fig. 6: in einem Blockdiagramm eine zweite Ausführungsform zur Ermittlung des für die Nachladephase erforderlichen Ladestroms.

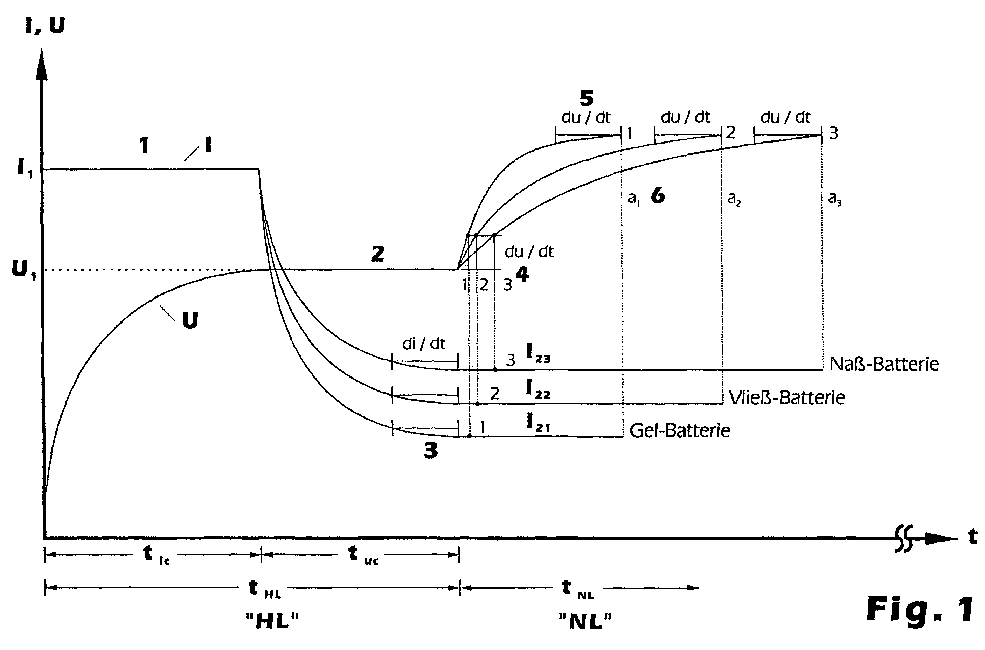

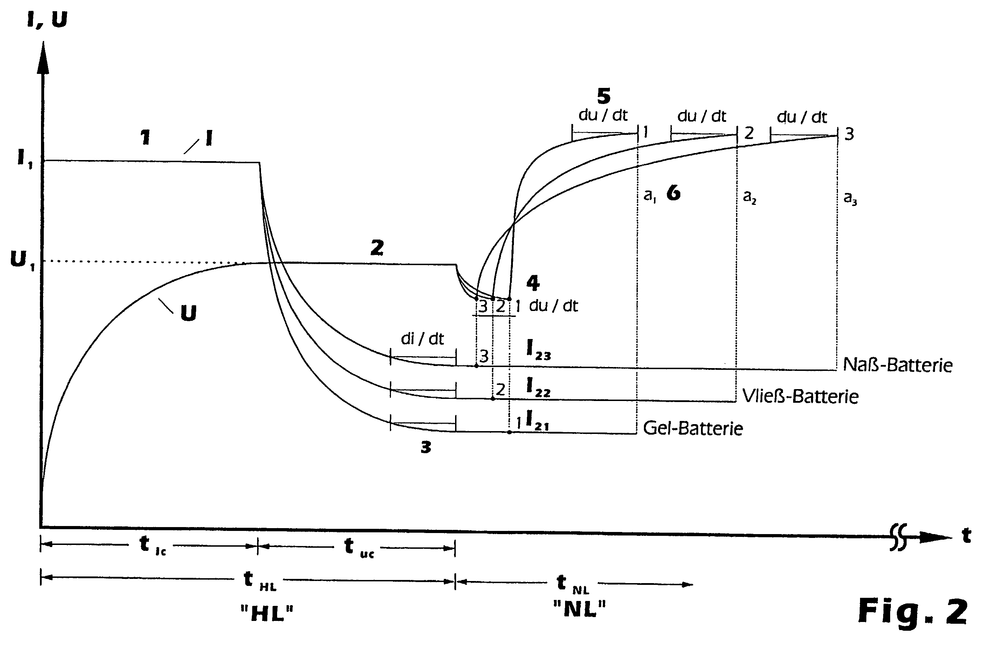

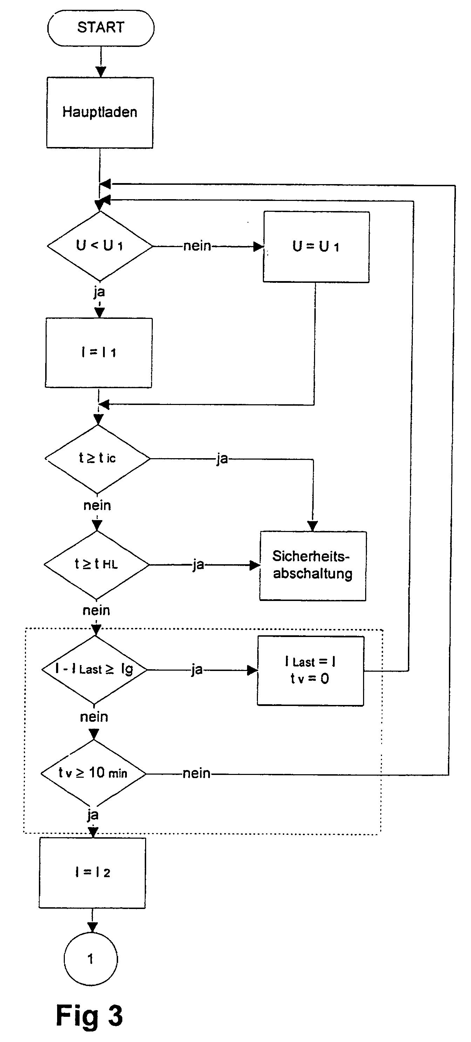

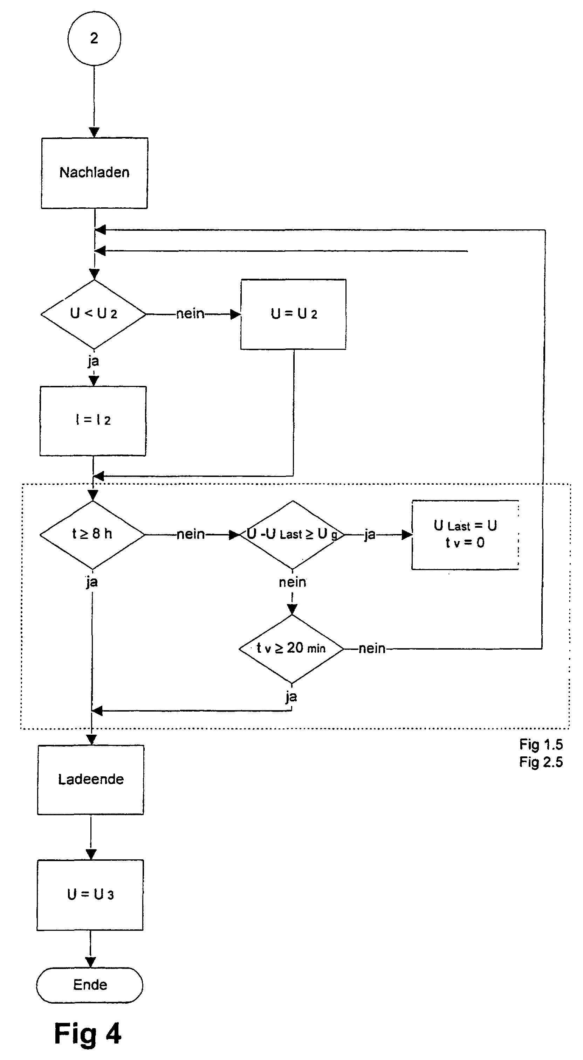

Wie die Fign. 1 und 2 zeigen, wie innerhalb des mit 1 gekennzeichneten Abschnitts innerhalb der Hauptladephase für die Zeit t_{ic} der maximalen Konstantstromphase, der Ladestrom l auf einen vorgebbaren Ladestrom l₁ konstant gehalten wird. Innerhalb dieser Zeit t_{ic} steigt die Ladespannung U langsam an. Bei Erreichen einer vorgebbaren Spannungsgrenze der Ladespanne U von U₁ wird die Ladespannung U auf diesen Wert U1 konstant gehalten und der Ladestrom l abgeschaltet. In den mit 2 gekennzeichneten Abschnitt der Hauptladephase, wird dann bei konstanter Ladespannung U = U1 die Änderung des Ladestroms l über der Zeit ermittelt und bei Erreichen eines vorgebbaren Änderungswertes di/dt der in diesem Zeitpunkt fließende Ladestrom l₂ konstant gehalten, wie in den mit 2 und 3 gekennzeichneten Abschnitten der Fign. 1 und 2 zu erkennen. Dieser Abschnitt ist in den Figuren 1 und 2 mit t_{uc} gekennzeichnet, der Zeit der maximalen Konstantspannungsphase. Die Abschnitte 1 und 2 bestimmen damit, wie den Fign. 1 und 2 zu entnehmen, die maximale Hauptladezeit Tₕₗ; die sich aus der Zeit der maximalen Konstantstromphase t_{ic} und der Zeit der maximalen Konstantspannungsphase t_{uc} zusammensetzt.

In der sich anschließenden Nachladephase wird dann bei diesem Ladestrom l₂ die Änderung der Ladespannung U über der Zeit ermittelt und bei Erreichen eines vorgebbaren Änderungswertes du/dt der Ladespannung U über der Zeit der Ladevorgang beendet.

Um eine Volladung unabhängig von der Akkumulatorenausführung hinsichtlich des verwendeten Elektrolyten zu gewährleisten, wird dabei der Ladestrom l₂ für die Nachladephase in einer sich der Hauptladephase anschließenden Ermittlungsphase bestimmt. Die Ermittlungsphase kann nach zwei verschiedenen Verfahren erfolgen, die in den Figuren 1 und 2 dargestellt sind.

In der ersten in Fig. 1 dargestellten Ermittlungsmethode wird der für die Nachladephase erforderliche Nachladestrom I₂ in Abhängigkeit der Akkumulatorenausführung, d. h. hinsichtlich eines Naß-, Vlies- oder Gelakkumulators bestimmt, wobei nach der Hauptladephase der Anstieg du/dt der Ladespannung U über der Zeit ermittelt und anhand dieses Wertes der Ladestrom I₂ für die Nachladephase vorgegeben wird, wie in Fig. 1 in dem mit 4 gekennzeichneten Abschnitt dargestellt. In Abhängigkeit des Anstieg du/dt der Ladespannung U wird dabei der erforderliche Nachladestrom l₂ für einen Naß, Vlies- oder Gelakkumulator vorgegeben. Die dazu jeweils erforderlichen Stromund Spannungswerte sind in der Steuereinrichtung veränderbar gespeichert. Der Akkumulator wird dann mit diesem Ladestrom l₂ weiter geladen und schließlich innerhalb der Nachladephase die Änderung der Ladespannung U über der Zeit ermittelt und bei Erreichen des vorgegebenen Änderungswertes du nach dt der Ladespannung U über der Zeit der Ladevorgang beendet, wie in Fig. 1 in den mit 5 und 6 gekennzeichneten Abschnitten dargestellt.

Bei der in Fig. 2 dargestellten Ermittlungsmethode zur Bestimmung des Ladestroms l₂ für die Nachladephasen wird nach Beendigung der Hauptladephase der Ladestrom l abgeschaltet und der Abfall du/dt der Ladespannung U über der Zeit ermittelt, wie in Fig. 2 in den mit 4 gekennzeichneten Abschnitt dargestellt.

Anhand dieses Wertes du/dt der Ladespannung U über der Zeit wird der für die Nachladephase erforderliche Ladestrom I₂ für Naß-, Vlies- oder Gelakkumulatoren vorgegeben und eingeschaltet. Bei diesem Ladestrom l₂ wird dann, wie in den in Fig. 2 mit 5 und 6 gekennzeichneten Abschnitten dargestellt, die Änderung der Ladespannung U über der Zeit ermittelt und bei Erreichen eines vorgebbaren Änderungswertes du/dt der Ladespannung U über der Zeit der Ladevorgang beendet.

Das in Fig. 3 dargestellte Blockdiagramm zeigt den Ablauf während der Hauptladephase, entsprechend den in den Fign. 1 und 2 mit 1 und 2 gekennzeichneten Abschnitten. Bei konstantem Ladestrom l = l₁ wird zunächst die Ladespannung U mit der entsprechend vorgegebenen Spannungsgrenze U, für das Hauptladen verglichen. Sobald die Ladespannung U die Spannungsgrenze U₁ erreicht, wird der Ladestrom I abgeschaltet und bei konstanter Ladespannung U = U, die Änderung di/dt des Ladestroms l über der Zeit ermittelt. Dies erfolgt in den in Fig. 3 gestrichelt umrahmten Bereich, wobei von dem Ladestrom l jeweils der Stromwert des Ladestroms l im letzten Schleifendurchlauf Iₗₐₛₜ subtrahiert und mit einem vorgebbaren Grenzwert der Stromänderung I_{g} verglichen wird. Sobald der Ladestrom I diesen Grenzwert I_{g} erreicht hat, wird der Ladestrom I auf diesen Stromwert I₂ für die Nachladephase festgelegt. Damit ist die Hauptladephase abgeschlossen.

Das in Fig. 4 dargestellte Blockdiagramm zeigt den Ablauf der Nachladephase, wobei bei dem Ladestrom l₂ dann die Änderung der Ladespannung U über der Zeit ermittelt bei Erreichen eines vorgebbaren Änderungswertes du/dt der Ladespannung U über der Zeit der Ladevorgang beendet wird. Dabei wird die Ladespannung U mit einer vorgebbaren maximalen Spannung für das Nachladen U₂ verglichen. Sobald die Ladespannung U den Spannungswert U₂ erreicht, wird der Ladevorgang beendet. In dem in Fig. 4 gestrichelt umrahmten Bereich ist dabei dargestellt, wie die Ermittlung der Änderung der Ladespannung U über der Zeit erfolgt. Dabei wird von der Ladespannung U der jeweilige Spannungswert der Ladespannung im letzten Schleifendurchgang U_{Last} subtrahiert und mit einem vorgegebenen Grenzwert der Spannungsänderung U_{g} verglichen, wie in den Fign. 1 und 2 in den Abschnitten 5 dargestellt.

Die in den Fign. 3 und 4 dargestellten Ablaufdiagramme umfassen desweiteren Sicherheitsabschaltmechanismen, die den Ladevorgang beenden. Die in Fig. 3 dargestellte Hauptladephase wird beendet, wenn eine vorgegebene maximale Hauptladezeit t_{HL} oder eine vorgegebene maximale Konstantstromphase t_{ic} des Ladestroms I überschritten wird. Innerhalb der in Fig. 4 dargestellten Nachladephase wird der Ladevorgang beendet, wenn eine vorgegebene maximale Nachladezeit tᵥ überschritten wird.

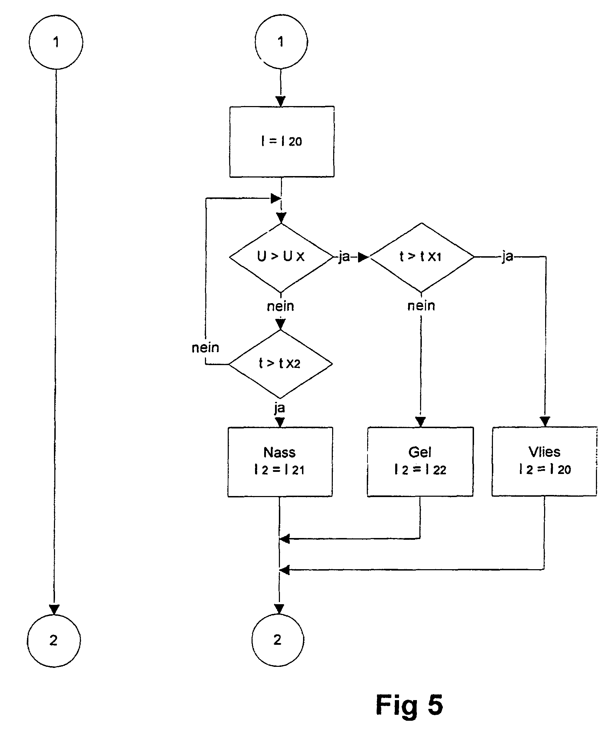

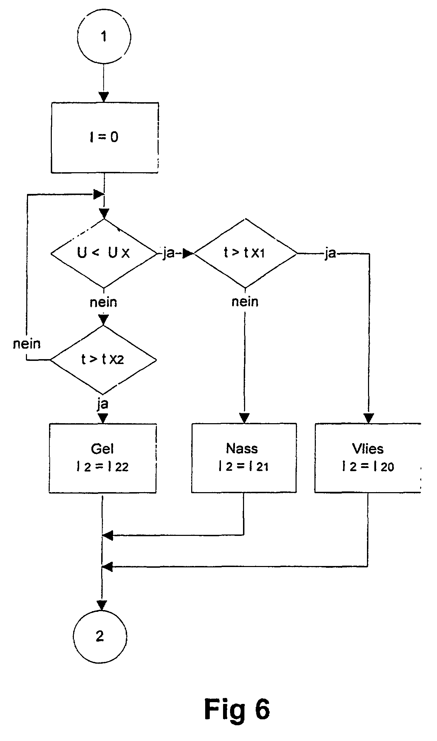

Zur automatischen Ermittlung der für verschiedene Akkumulatorenausführungen erforderlichen Nachladeströme l₂ für Naß-, Vlies- oder Gelakkumulatoren sind in den Fign. 5 und 6 zwei verschiedene Ermittlungsphasen zur Bestimmung des Nachladestroms l dargestellt.

Fig. 6 zeigt in einem Blockdiagramm den Ablauf der Ermittlung des Ladestroms l₂ für die Nachladephase gemäß Fig. 1. Das Blockdiagramm gemäß Fig. 6 wird dabei an den mit 1 und 2 gekennzeichneten Stellen an die Blockdiagramme gemäß Fig. 3 und 4 eingefügt.

Zur Ermittlung des Ladestroms I₂ für die Nachladephase wird dabei nach der Hauptladephase gemäß Fig. 3 der Anstieg du/dt der Ladespahnung U über der Zeit ermittelt und anhand dieses Wertes der Ladestrom l₂ für die Nachladephase in Abhängigkeit des jeweils ermittelten Akkumulatorentyps, d. h. für Naß-, Vlies- und Gelakkumulatoren vorgegeben. Dabei wird, wie in Fig. 5 dargestellt, die Ladespannung U mit der Spannungsgrenze Uₓ zur Erkennung des Akkumulatorentyps verglichen. Dieser Vergleich ist dabei in zwei verschiedene Zeitvergleiche eingebunden, anhand derer festgestellt werden kann, um was für einen zu ladenden Akkumulatorentyp es sich handelt. Anhand dieser Vergleiche ist dann ermittelt, mit welchem Ladestrom l₂ die Nachladephase durchgeführt wird. Die jeweiligen Werte für den Zeitvergleich und den Nachladestrom l₂ für Naß-, Geloder Vliesakkumulatoren sind dabei vorgebbar seitens der Steuereinrichtung vorhanden.

Bei der Ermittlung des Ladestroms l₂ für die Nachladephase in Abhängigkeit des Akkumulatorentyps gemäß Fig. 6, wird nach der Hauptladephase der Ladestrom l abgeschaltet, der Abfall du/dt der Ladespannung l über der Zeit ermittelt und anhand dieses Wertes der Ladestrom l₂ für die Nachladephase vorgegeben und eingeschaltet. Dabei wird der Spannungsabfall der Ladespannung U ebenfalls durch einen Vergleich mit der Spannungsgrenze Uₓ zur Erkennung des Akkumulatorentyps verglichen, wobei auch dieser Vergleich in zwei Zeitvergleiche eingebunden ist. Durch diese Auswahllogik läßt sich auch hier, wie bei der Ermittlungsphase gemäß Fig. 5 der Ladestrom l₂ für Gel-, Naß- oder Vliesakkumulatoren seitens der Steuereinrichtung vorgeben. Fig. 6 ist dabei schon wie Fig. 5 in den Ablauf des Ladeverfahrens zwischen den Fign. 3 und 4 an den Punkten 1 und 2 eingefügt.

### Bezugszeichenliste

- I: Ladestrom
- U: Ladespannung
- U1: Spannungsgrenze Hauptladen
- I1: Stromgrenze Hauptladen
- U₂: Spannungsgrenze Nachladen
- l₂: Stromgrenze Nachladen
- U_{Last}: Spannungswert im letzten Schleifendurchgang
- l_{Last}: Stromwert im letzten Schleifendurchgang
- U_{g}: Grenzwert Spannungsänderung
- I_{g}: Grenzwert Stromänderung
- I₂₀: Einstellwert Strom für Vliesakkumulatoren
- I₂₁: Einstellwert Strom für Naßakkumulatoren
- l₂₂: Einstellwert Strom für Gelakkumulatoren
- Uₓ: Spannungsgrenze für Erkennung des Akkumulatorentyps
- t: Zeit
- t_{ic}: maximale Zeit Konstantstromphase
- t_{HL}: maximale Hauptladezeit
- tᵥ: Zeit in der die Grenzwertbedingung erfüllt ist
- tₓ₁: Zeitvergleich 1
- tₓ₂: Zeitvergleich 2

## Patentansprüche

1. Verfahren zum Laden von Akkumulatoren, insbesondere für Gel-, Vlies- und Naßakkumulatoren, unter Verwendung einer steuerbaren Strom- und Spannungsquelle und einer Steuereinrichtung, mit einer Haupt- und Nachladephase, wobei in der Hauptladephase der Ladestrom (l) konstant gehalten wird bis die Ladespannung (U) eine vorgebbare Spannungsgrenze (U₁) erreicht,
**dadurch gekennzeichnet,**
**daß** sodann bei konstanter Ladespannung (U₁) die Änderung (di/dt) des Ladestrom (l) über der Zeit ermittelt und bei Erreichen eines vorgebbaren Änderungswertes (di/dt) des Ladestroms (l) über der Zeit der zu diesem Zeitpunkt fließende Ladestrom (l₂) konstant gehalten wird und in der Nachladephase bei diesem Ladestrom (l₂) dann die Änderung (du/dt) der Ladespannung (U) über der Zeit ermittelt und bei erreichen eines vorgebbaren Änderungswertes (du/dt) der Ladespannung (U) über der Zeit der Ladevorgang beendet wird.

2. Verfahren nach Anspruch 1, **dadurch gekennzeichnet, daß** der für die Nachladephase erforderliche Nachladestrom (l₂) in Abhängigkeit des Akkumulatorentyps bestimmt wird, wobei nach der Hauptladephase der Anstieg (du/dt) der Ladespannung (U) über der Zeit ermittelt und anhand dieses Wertes der Ladestrom (I₂, I_{20,} I₂₁, I₂₂) für die Nachladephase vorgegeben wird.

3. Verfahren nach Anspruch 1, **dadurch gekennzeichnet, daß** der für die Nachladephase erforderliche Nachladestrom (I₂) in Abhängigkeit des Akkumulatorentyps bestimmt wird, wobei nach der Hauptladephase der Ladestrom (l) abgeschaltet, der Abfall (du/dt) der Ladespannung (U) über der Zeit ermittelt und anhand dieses Wertes der Ladestrom (I₂, I₂₀, I₂₁ I₂₂) für die Nachladephase vorgegeben und eingeschaltet wird.

4. Verfahren nach einem oder mehreren der Ansprüche 1 bis 3, **dadurch gekennzeichnet, daß** während der Hauptladephase der Ladevorgang beendet wird, wenn eine vorgegebene maximale Hauptladezeit (t_{HL}) überschritten wird.

5. Verfahren nach einem oder mehreren der Ansprüche 1 bis 4, **dadurch gekennzeichnet, daß** während der Hauptladephase der Ladevorgang beendet wird, wenn eine vorgegebene maximale Konstantstromphase (t_{ic}) des Ladestroms (l) überschritten wird.

6. Verfahren nach einem oder mehreren der Ansprüche 1 bis 5, **dadurch gekennzeichnet, daß** während der Nachladephase der Ladevorgang beendet wird, wenn eine vorgebbare maximale Nachladezeit überschritten wird.

## Claims

1. A method of charging accumulators, particularly for gel, fleece and wet accumulators, using a controllable current and voltage source and a control device, with a main and an auxiliary charging phase, whereby the charging current (I) is maintained constant in the main charging phase until the charging voltage (U) has reached a predetermined threshold voltage (U₁), **characterised in that**, with a constant charging voltage (U₁), the change (di/dt) of the charging current (I) over time is determined and when a predeterminable value of the change (di/dt) of the charging current (I) over time is reached, the charging current (I₂) flowing at that time is maintained constant and, in the auxiliary charging phase at this charging current (I₂), the change (du/dt) of the charging voltage (U) over time is determined and when a predeterminable value of the change (du/dt) in the charging voltage (U) over time is reached, the charging process is terminated.

2. A method as claimed in Claim 1, **characterised in that** the auxiliary charging current (I₂) necessary for the auxiliary charging phase is determined in dependence on the type of accumulator, whereby after the main charging phase, the rise (du/dt) in the charging voltage (U) over time is determined and the charging current (I₂, I₂₀, I₂₁, I₂₂) for the auxiliary charging phase is set with reference to this value.

3. A method as claimed in Claim 1, **characterised in that** the auxiliary charging current (I₂) necessary for the auxiliary charging phase is determined in dependence on the type of accumulator, whereby after the main charging phase the charging current (I) is switched off, the fall (du/dt) in the charging voltage (U) with time is determined and the charging current (I₂, I₂₀, I₂₁, I₂₂) for the auxiliary charging phase is determined with reference to this value and switched on.

4. A method as claimed in one or more of Claims 1 to 3, **characterised in that** the charging process is terminated during the main charging phase when a predetermined maximum main charging duration (t_{HL}) is exceeded.

5. A method as claimed in one or more of Claims 1 to 4, **characterised in that** the charging process is terminated during the main charging phase when a predetermined maximum constant current phase (t_{ic}) of the charging current (I) is exceeded.

6. A method as claimed in one or more of Claims 1 to 5, **characterised in that** the charging process is terminated during the auxiliary charging phase when a predeterminable maximum auxiliary charging duration is exceeded.

## Revendications

1. Procédé pour charger des batteries, notamment pour des batteries à gel, à tapis de fibres ou humides, en utilisant une source de courant et de tension commandable et un dispositif de commande, avec une phase de charge principale et une phase de charge secondaire, le courant de charge (I) étant gardé constant pendant la phase de charge principale jusqu'à ce que la tension de charge (U) atteigne une limite de tension (U₁) pouvant être prescrite,
**caractérisé par le fait qu'**on détermine alors pour une tension de charge constante (U₁) la variation (di / dt) du courant de charge (I) en fonction du temps et, lorsqu'une valeur pouvant être prescrite de variation (di / dt) du courant de charge (I) en fonction du temps est atteinte, on maintient constant le courant de charge (I₂) passant à cet instant et que, pendant la phases de charge secondaire, on détermine alors pour ce courant de charge (I₂) la variation (du / dt) de la tension de charge (U) en fonction du temps et, lorsqu'une valeur pouvant être prescrite de variation (du / dt) de la tension de charge (U) en fonction du temps est atteinte, on met fin à l'opération de charge.

2. Procédé selon la revendication 1, **caractérisé par le fait que** le courant de charge secondaire (I₂) nécessaire à la phase de charge secondaire est déterminé en fonction du type d'accumulateur de telle sorte que, après la phase de charge principale, l'augmentation (du / dt) de la tension de charge (U) en fonction du temps est déterminée et, à l'aide de cette valeur, le courant de charge (I₂, I₂₀, I₂₁, I₂₂) pour la phase de charge secondaire est prescrit.

3. Procédé selon la revendication 1, **caractérisé par le fait que** le courant de charge secondaire (I₂) nécessaire à la phase de charge secondaire est déterminé en fonction du type d'accumulateur de telle sorte que, après la phase de charge principale, le courant de charge (I) est arrêté, la chute (du / dt) de la tension de charge (U) en fonction du temps est déterminée et, à l'aide de cette valeur, le courant de charge (I₂, I₂₀, I₂₁, I₂₂) pour la phase de charge secondaire est prescrit et branché.

4. Procédé selon une ou plusieurs des revendications 1 à 3, **caractérisé par le fait que**, pendant la phase de charge principale, on met fin à l'opération de charge lorsqu'un temps de charge principale (t_{HL}) maximal prescrit est dépassé.

5. Procédé selon une ou plusieurs des revendications 1 à 4, **caractérisé par le fait que**, pendant la phase de charge principale, on met fin à l'opération de charge lorsqu'une phase de courant constant (t_{ic}) maximale prescrite du courant de charge (I) est dépassée.

6. Procédé selon une ou plusieurs des revendications 1 à 5, **caractérisé par le fait que**, pendant la phase de charge secondaire, on met fin à l'opération de charge lorsqu'un temps de charge secondaire maximal pouvant être prescrit est dépassé.
